# EUROPÄISCHE PATENTANMELDUNG

(11) **EP 2 133 315 A1**
(43) Veröffentlichungstag der Anmeldung: **16.12.2009**
(21) Anmeldenummer: 09401007.1
(22) Anmeldetag: 10.06.2009
(51) Int. Cl.: C03B 5/04, C03B 5/02

(54) **Hochleistungsschmelzverfahren für die Glasherstellung als High-Efficiency-Glas-Melter-Verfahren (HEGM Verfahren) und dazugehörige Anlage zur Glasherstellung**

(30) Priorität: 11.06.2008 DE 102008002881; 02.06.2009 DE 102009025905
(71) Anmelder: Wenning, Rolf, 46397 Bocholt (DE); Fraass, Michael, 52525 Heinsberg (DE); Fraass, Matthias, 45894 Gelsenkirchen (DE); Prang, Harald, 45886 Gelsenkirchen (DE); Räbiger, Wolfgang, 39340 Haldensleben (DE)
(72) Erfinder: Wenning, Rolf, 46397 Bocholt (DE); Fraass, Michael, 52525 Heinsberg (DE); Fraass, Matthias, 45894 Gelsenkirchen (DE); Prang, Harald, 45886 Gelsenkirchen (DE); Räbiger, Wolfgang, 39340 Haldensleben (DE)
(74) Vertreter: Weissfloh, Ingo

(57) **Zusammenfassung**

Aufgabe der Erfindung ist es, ein energieeinsparendes Hochleistungsschmelzverfahren für die Glasherstellung und dazugehörige Anlagen zu schaffen.

Das High-Efficiency-Glas-Melter-Verfahren (HEGM-Verfahren), vereinigt die bereits bekannten Verfahren
- Einsatz niedrig schmelzender Eutektika (22), bestehend aus mindestens zwei unterschiedlichen Gemengekomponenten (20),
- Feinstaufmahlung der Gemengekomponenten (20) und
- Dünnfilmschmelzeverfahren

zu einem Verfahren zur hocheffizienten Schmelze von Glas unter Nutzung neuer Anlagenteile zusammengefasst werden. Weiterhin werden die bekannten effizienten Verfahren zur beschleunigten Läuterung und Homogenisierung angeschlossen, wobei mindestens zwei Verfahren parallel in eine gemeinsame Konditionierungswanne (1) arbeiten.
Die Anlage zum HEGM-Verfahren besteht aus einer zentralen, beheizbare Konditionierungswanne (1) in Form eines Vieleckraumkörpers mit einem Abflussmodul (2) und mit angedockten Meltern (3) mit Fördereinrichtungen (4), die mit einem Gemengelager (5) oder mit einer Mahleinrichtung (6) verbunden sind.
Das Anwendungsgebiet der Erfindung ist die Glasherstellung.

## Beschreibung

Hochleistungsschmelzverfahren für die Glasherstellung als High Efficiency Glas Melter (HEGM) und dazugehörige Anlage zur Glasherstellung insbesondere zur Realisierung wesentlicher Energieeinsparungen gegenüber bisher üblichen Verfahren.

Der Stand der Technik zur Energieeinsparung bei der Glasherstellung wird hauptsächlich durch Wärmerückgewinnungsvarianten realisiert. So wird z. B. in der DE 29 05 089 A1 ein Verfahren zur Energierückgewinnung beim Schmelzen von Glas, bei dem die Schmelzwärme für die Glasrohstoffe durch die Verbrennung von Öl, Gas o. ä. unter fortwährender Luftzuführung erzeugt wird und die Abgase zunächst rekuperativ die Verbrennungsluft und dann durch direkten Wärmeaustausch die Glasrohstoffe vorwärmen.

In der DE 100 29 983 C2 wird ein Verfahren und eine Vorrichtung zum Schmelzen und Läutern von Glas mit Wärmerückgewinnung beschrieben. Hier wird die Beheizung mit fossilen Brennstoffen und Oxidationsgase unter Verwendung von Tauchbrennern und mit Wärmerückgewinnung in einem Schmelzreaktor, in dem das feste Schmelzgut entlang eines Fallweges im Gegenstrom zu aufsteigenden Verbrennungsgasen bewegt. Unterhalb des Fallweges wird im Schmelzreaktor ein Sammelvolumen aus einem oberen Sammelvolumen und einem unteren Sammelvolumen für aus dem Schmelzgut gebildete Schmelze erzeugt. Im oberen Sammelvolumen wird durch die Tauchbrenner eine Aufheizung, Verwirbelung und Homogenisierung der Schmelze und im unteren Sammelvolumen unterhalb der Tauchbrenner und vor einem Bodendurchlass wird eine vertikale, nach unten gerichtete Kolbenströmung der Schmelze mit im wesentlichen waagrechten Isothermen ausgebildet, mit einem Läuterabteil, dem das geschmolzene Glas über den Bodendurchlass zugeführt wird. Für die Tauchbrenner werden Oxidationsgase mit mindestens 80% Sauerstoffanteil verwendet. Die Schmelze wird im Läuterabteil auf einer Läuterbank durch mindestens einen weiteren Brenner, der gleichfalls mit fossilen Brennstoffen und Oxidationsgasen mit mindestens 80% Sauerstoffanteil betrieben wird, weiter aufgeheizt. Die Verbrennungsgase dieses mindestens einen Brenners werden dem Schmelzreaktor aus dem Läuterabteil zum Wärmeaustausch mit dem Schmelzgut zugeführt.

In der DE 100 29 983 C2 wird eine Vorrichtung zum Erschmelzen und/oder Läutern anorganischer Verbindungen, insbesondere von Glasscherben oder Gemenge und anderen Stoffen mit einem Tiegel zur Aufnahme von aufzuheizendem Gut beschrieben. Das Gut wird mit einer Hochfrequenzeinrichtung durch Einkoppeln von Hochfrequenzenergie in das Gut erwärmt und geschmolzen. Die Hochfrequenzeinrichtung besteht aus einem Hochfrequenz-Schwingkreis, der wiederum aus einer Induktionsspule, die den Tiegel umschlingt und einem Kondensator, vorzugsweise einzelne Kondensatorbatterien besteht und als Oszillator arbeiten. Jede einzelne Kondensatorbatterie ist zusammen mit der Induktorspule als funktionsfähiger Schwingkreis betreibbar, ohne dass es einer Änderung der Oszillatorschaltung bedarf. Weiterhin ist ein zweiter Oszillator vorgesehen, der mit der Induktionsspule zusammenschaltbar ist.

Aufgabe der Erfindung ist es, ein energieeinsparendes Hochleistungsschmelzverfahren für die Glasherstellung und dazugehörige Anlagen zu schaffen.

Mit der Erfindung wird weiterhin neben der Energieeinsparung erreicht, dass teilweise bereits bekannte Verfahren und Vorrichtungen zu großtechnischen Verfahren und Anlagen kombiniert werden.

Vorteilhafte Ausgestaltungen des erfindungsgemäßen Verfahrens sind in den Ansprüchen 2 bis 6 und der Anlage in den Ansprüchen 8 bis 13 aufgeführt. Nach Anspruch 2 können Teilverfahren des Gesamtverfahrens parallel in eine gemeinsame Konditionierungswanne arbeiten. Hierdurch kann der Gesamtablauf verkürzt werden. Bei der Weiterbildung des Verfahrens nach Anspruch 3 werden besonders geeignete Gemengekomponenten einer Feinstaufmahlung unterzogen und dadurch durch einen geringeren Energieeinsatz als bisher üblich die Glasschmelze erzeugt. Nach Anspruch 4 werden durch eine erzeugte Strömung und durch Zugabe von feinstaufgemahlenem Quarz ebenfalls Energieeinsparungen erreicht. Bei der Weiterbildung nach Anspruch 5 werden während oder nach der Feinstaufmahlung der Gemengekomponenten diese mittels geeigneter Mahltechnik, z. B. mit einer Schwingmühle einer Reaktionsmahlung zur Erzielung von Festkörperreaktionen in den Gemengekomponenten unterzogen. Auch dieses Teilverfahren dient zur Energieeinsparung. Nach Anspruch 6 wird ein spezielles Verfahren beschrieben, welches ebenfalls in seiner Kompaktheit eine Energieeinsparung ermöglicht.

Die Anlage zum Hochleistungsschmelzverfahren nach Anspruch 8 beschreibt den Aufbau der Konditionierungswanne als ein Vieleckraumkörper mit an den Vieleckseiten angedockten Melter-Modulen. Hierdurch können gleichzeitig mehrere Melter in die gemeinsame Konditionierungswanne arbeiten. Nach Anspruch 9 sind die Melter in ihrer Neigung frei einstellbar und bestehen aus einem Platinrohr, aus einem mit Platin innenbeschichteten Keramikrohr oder aus einer im Winkel einstellbaren, beschichteten oder unbeschichteten schiefen Ebene. Diese Ausführungsarten dienen einer qualitätsgerechten Glasherstellung bzw. beeinflussen die Fließgeschwindigkeit der Schmelze. Mindestens ein Melter der Anlage besitzt nach Anspruch 10 ein doppelwandiges Keramikrohr mit einem Suszeptor im Spalt des doppelwandigen Keramikrohres und an der Außenseite angebrachten Mikrowellen mit der Arbeitsrichtung zur Mittelachse des Keramikrohres. Mit dieser Art der Beheizung wird ebenfalls eine vorteilhafte Energiebilanz erreicht. Nach Anspruch 11 ist mindestens ein Melter oder alle Melter austauschbar und aus einer Warteposition an die Konditionierungswanne heranfahrbar gestaltet. Hierdurch kann Einfluss auf die zu bearbeitende Menge des Gemenges ebenfalls unter Beachtung der eingesetzten Energie genommen werden. Zusätzlich sind Melter in der Warteposition leicht zu pflegen und zu warten. Bei der Weiterbildung nach Anspruch 12 mündet das Abflussmodul in einen Speiser, in einen Kanal eines Float-Bades oder in eine Verarbeitungs- oder Formgebungsanlage. Es ist also eine leichte Anpassung an gewünschte Detaillösungen der Anlage möglich. Nach Anspruch 13 kann zur weiteren Energieeinsparung in die Anlage eine Wärmerückgewinnungsanlage und eine Verbrennungsluftvorwärmung integriert sein.

Ausführungsbeispiele der Erfindung werden in der Zeichnung dargestellt und im folgenden näher beschrieben. Es zeigen:

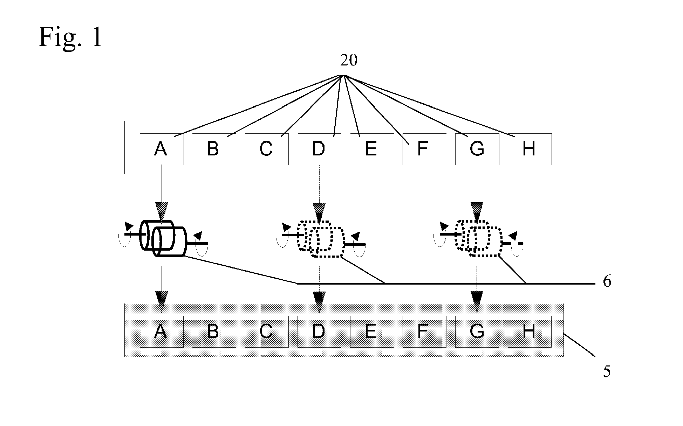

Fig. 1 Fig. 1 die Verfahrensstufe der Gemengeaufbereitung mittels Feinst- und/oder Reaktionsmahlung,

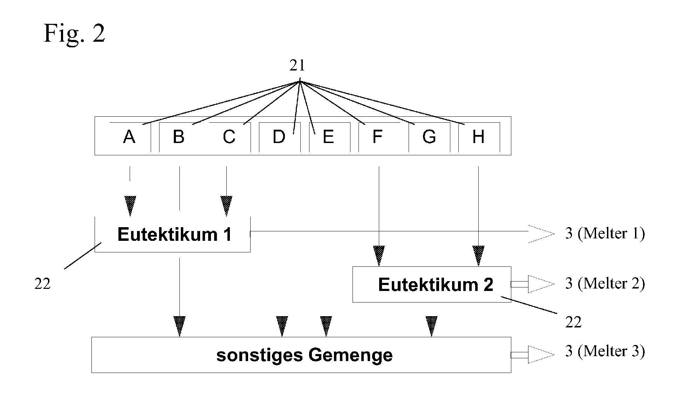

Fig. 2 die Bildung niedrigschmelzender Eutektika aus jeweils zwei feinstaufgemahlene Gemengekomponenten,

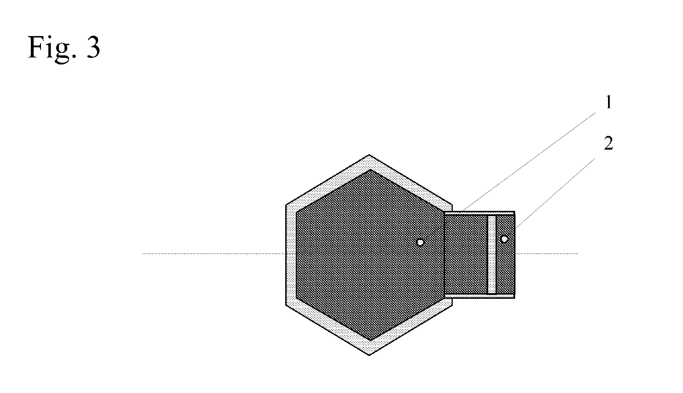

Fig. 3 die Draufsicht auf eine Konditionierungswanne mit einem Abflussmodul,

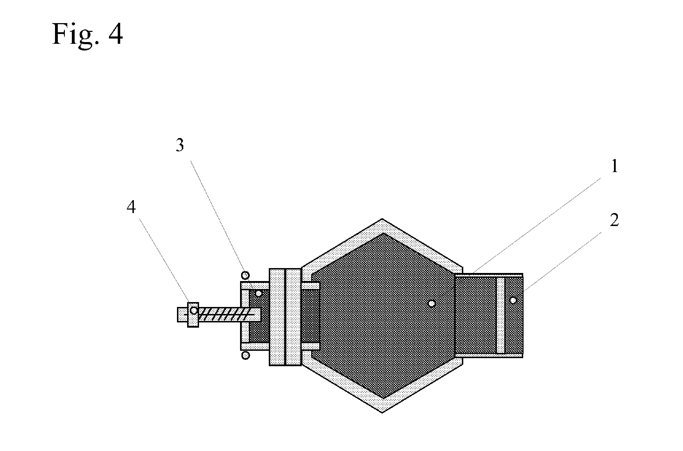

Fig. 4 die Draufsicht wie nach Fig. 3 mit einem Melter mit Fördereinrichtung,

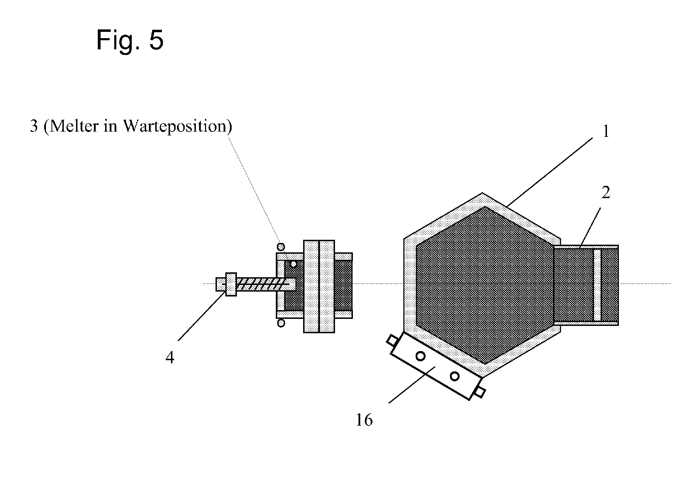

Fig. 5 die Draufsicht wie nach Fig. 4 jedoch mit einem Melter in Warteposition,

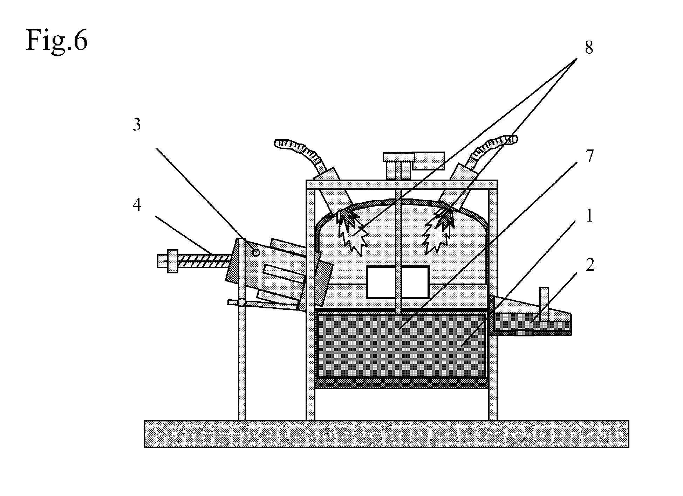

Fig. 6 den Schnitt durch eine Konditionierungswanne mit einem angedockten, geneigten Melter mit Fördereinrichtung und ein Abflussmodul,

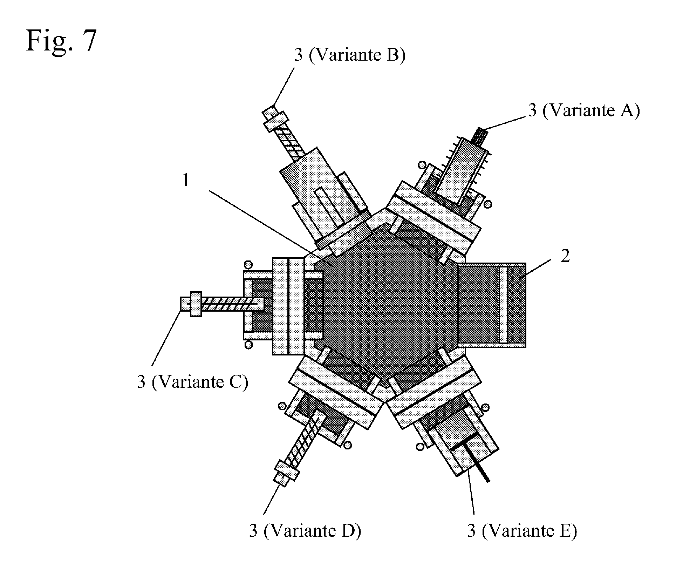

Fig. 7 die Draufsicht auf eine Konditionierungswanne mit Abflussmodul und verschiedensten Meltervarianten,

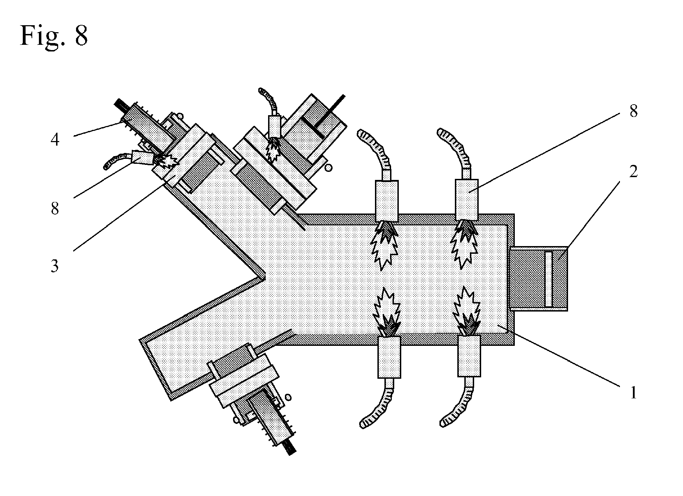

Fig. 8 die Draufsicht auf eine Konditionierungswanne mit Abflussmodul und verschiedensten Meltervarianten in einer Variante zu Fig. 7,

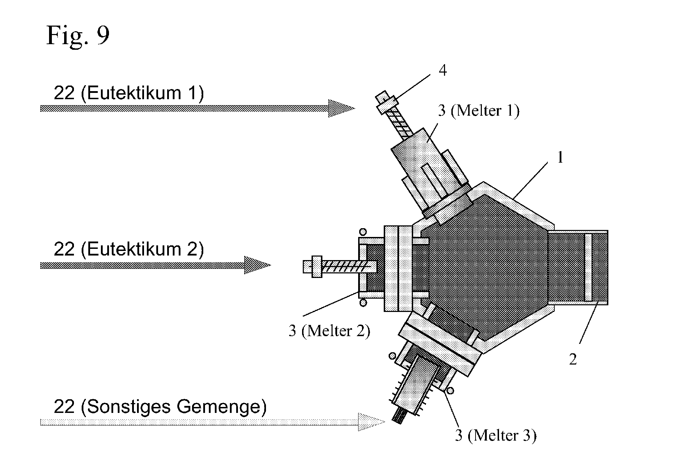

Fig. 9 die Draufsicht auf eine Konditionierungswanne mit Ablussmodul und drei Meltern mit der schematischen Darstellung unterschiedlichster Gemengezuführungen,

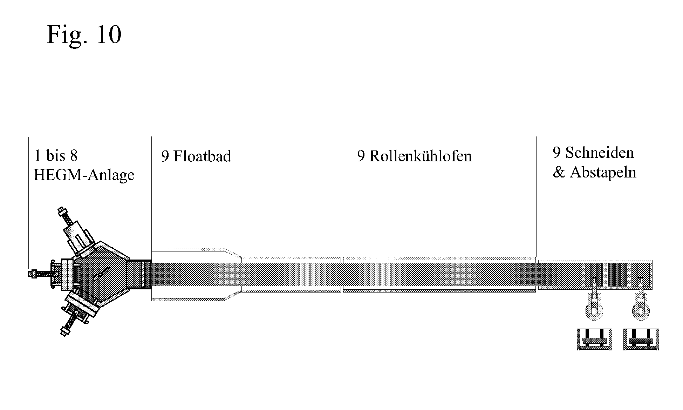

Fig. 10 ein Verwendungsbeispiel von HEGM (mit Konditionierungswanne, Abflussmodul und drei Meltern) mit einem anschließendem Floatbad, einem Rollenkühlofen und einer Bearbeitungseinheit zum Schneiden und Stapeln der Glaselemente und

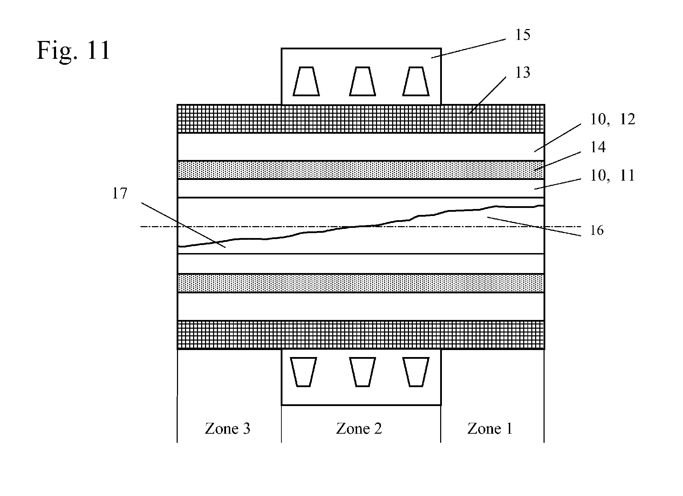

Fig. 11 die Schnittdarstellung durch einen Melter mit Mikrowellenbeheizung.

Das Hochleistungsschmelzverfahren für die Glasherstellung als High Efficiency-Glas-Melter-Verfahren (HEGM-Verfahren) kombiniert die bereits bekannten Verfahren
- Einsatz niedrig schmelzender Eutektika 22, bestehend aus mindestens zwei unterschiedlichen Gemengekomponenten 20,
- Feinstaufmahlung der Gemengekomponenten 20 und
- Dünnfilmschmelzeverfahren
zu einem Verfahren zur hocheffizienten Schmelze von Glas. Zusätzlich werden die bekannten effizienten Verfahren zur beschleunigten Läuterung und Homogenisierung angeschlossen,
wobei mindestens zwei Verfahren parallel in eine gemeinsame Konditionierungswanne 1 arbeiten.

Das HEGM-Verfahren nutzt weiterhin neue erfindungsgemäße Anlagenteile, wie z. B. einen mit einer Mikrowelle 15 beheizten Melter (Dünnfilmschmelzer) 3.

Als Eutektika 22 werden vorzugsweise zwei unterschiedliche Gemengekomponenten 20, wie z. B. Soda (Na2C03), Kalk (CaC03), Natriumsulfat (Na2S04), Borax (B2O3), Flussspat (NaF), Amoniumsulfat ((NH3)2SO4), Ortophosphate und/oder Dolomit (CaCO3*MgCO3) verwendet. Diese Gemengekomponenten 20 werden zu feinstaufgemahlene Gemengekomponenten 21 mit einer Korngröße von 0,001 mm bis 0,5 mmm verarbeitet. Diese Feinstaufmahlung kann so erfolgen, dass während oder nach der Feinstaufmahlung der Gemengekomponenten 20 diese mittels geeigneter Mahltechnik, wie z. B. einer Schwingmühle einer Reaktionsmahlung zur Erzielung von Festkörperreaktionen in den Gemengekomponenten 20 unterzogen werden.

Die Eutektika 22, also vorzugsweise zwei unterschiedliche feinstaufgemahlene Gemengekomponenten 21, werden unterschiedlichen Dünnfilmschmelzern 3 (Melter 3) über Fördereinrichtungen 4 zugeführt. Innerhalb der Melter 3 erfolgt die Schmelze. Die Melter 3 besitzen vorzugsweise eine Neigung in Richtung Konditionierungswanne 1. Die jeweilige Gemengeschmelze der Melter 3 fließt dadurch in die Konditionierungswanne 1 ab. Hier werden mittels eines Rührwerkes 7 und eines oder mehrerer Brenner 8 die Gemengeschmelzen der einzelnen Melter 3 vermengt, geläutert, konditioniert und auf einer bestimmten Temperatur gehalten, ehe die geläuterte und konditionierte Glasschmelze über ein Abflussmodul 2 weiteren Verfahrensschritten in entsprechenden Anlagenteilen, wie z. B. einem Float-Bad 9 oder einer Verarbeitungs- oder Formgebungsanlage 9 zugeführt wird.

Die Anlage zum Hochleistungsschmelzverfahren für die Glasherstellung als High Efficiency Glas Melter (HEGM) besitzt eine zentrale, beheizbare Konditionierungswanne 1 mit einem Abflussmodul 2 und mindestens einen Melter 3. Die Konditionierungswanne 1 besteht vorzugsweise aus einem Vieleckraumkörper mit an den Vieleckseiten angedockten Melter-Modulen 3. Im Deckenbereich der Konditionierungswanne 1 befindet sich das Rührwerk 7 und mindestens ein Brenner 8. Der oder die Melter 3 ist/sind jeweils über eine Fördereinrichtung 4 mit einem Gemengelager 5 oder mit einer Mahleinrichtung 6 verbunden.

Die Melter 3 sind in ihrer Neigung frei einstellbar und bestehen vorzugsweise aus einem Platinrohr, aus einem mit Platin innenbeschichteten Keramikrohr oder aus einer im Winkel einstellbaren, beschichteten oder unbeschichteten schiefen Ebene.

Die Melter 3 sind so gestaltet, dass sie austauschbar sind und aus einer Warteposition an die Konditionierungswanne 1 heranfahrbar gestaltet sind. Während der Warteposition ist die Öffnung für den Melter 3 an der Wanne 1 mit einer Platte verschließbar.

Die Beheizung der Melter 3 kann auf die unterschiedlichste Art und Weise erfolgen, wie z. B. mit Gas und kann zusätzlich mit einer Wärmerückgewinnungsanlage gekoppelt sein. Auch eine Verbrennungsluftvorwärmung ist hier vorteilhaft einsetzbar. Vorteilhaft sind an der Außenseite um die Öffnungen der Konditionierungswanne 1 für die Melter 3 an der Oberseite und den beiden Seiten Wärmeauffangbleche mit Absaugvorrichtungen 16 für die austretenden Wärme aus der Konditionierungswanne 1 beim Wechseln der Melter 3 vorgesehen. Diese Abwärme wird zum Vorheizen der Gemenge genutzt oder der Wärmerückgewinnungsanlage zugeführt.

Ein spezieller Melter 3 ist folgendermaßen aufgebaut. Er besteht aus einem doppelwandigen, in leichter Neigung liegenden Keramikrohr 10, also aus einem Innenrohr 11 und einem Außenrohr 12. An der Außenseite des Außenrohres 12 ist eine Isolierung 13 aus geeigneten Isolationsmaterialien, wie z. B. Schamotte, angebracht. Zwischen dem Innenrohr 11 und dem Außenrohr 12 ist ein Spalt für einen Suszeptor 14 vorgesehen. In einem Teilbereich des Keramikrohres 10 mit der Isolierung 13 am Außenumfang, vorzugsweise in der Mitte der Gesamtlänge des Keramikrohres 10, ist/sind eine oder mehrere Mikrowelle(n) 15 mit ihrer Arbeitsrichtung in Richtung Mittelachse des Keramikrohres 10 vorgesehen. Hierdurch kann die benötigte Energie zielgerichtet und für den jeweiligen Schmelzvorgang optimal ermittelt eingesetzt werden.

### Zusammenstellung der Bezugszeichen

1 - Konditionierungswanne, beheizbare Wanne
2 - Abflussmodul
3 - Dünnfilmschmelzer, Melter
4 - Fördereinrichtung
5 - Gemengelager,
6 - Mahleinrichtung, Feinst- und/oder Reaktionsmahlung
7 - Rührwerk
8 - Brenner
9 - Speiser, Float-Bad, Verarbeitungs- oder Formgebungsanlage
10 - Keramikrohr
11 - Innenrohr
12 - Außenrohr
13 - Isolierung
14 - Suszeptor
15 - Mikrowelle
16 - Wärmeauffangbleche mit Absaugung
20 - Gemengekomponenten
21 - feinst aufgemahlene Gemengekomponenten
22 - Eutektikum

## Patentansprüche

1. Hochleistungsschmelzverfahren für die Glasherstellung als High-Efficiency-Glas-Melter-Verfahren (HEGM-Verfahren),
**dadurch gekennzeichnet,**
**dass** die bereits bekannten Verfahren
a) Einsatz niedrig schmelzender Eutektika (22), bestehend aus mindestens zwei unterschiedlichen Gemengekomponenten (20),
b) Feinstaufmahlung der Gemengekomponenten (20) und
c) Dünnfilmschmelzeverfahren
zu einem hintereinander ablaufenden Verfahren zur hocheffizienten Schmelze von Glas zusammengefasst werden und zusätzlich die bekannten effizienten Verfahren zur beschleunigten Läuterung und Homogenisierung in einer Konditionierungswanne (1) angeschlossen werden.

2. Hochleistungsschmelzverfahren nach Anspruch 1,
**dadurch gekennzeichnet,**
**dass** mindestens zwei Verfahren a) bis c) parallel in eine gemeinsame Konditionierungswanne (1) arbeiten.

3. Hochleistungsschmelzverfahren nach einem der vorhergehenden Ansprüche,
**dadurch gekennzeichnet,**
**dass** Soda (Na2C03), Kalk (CaC03), Natriumsulfat (Na2S04), Borax (B2O3), Flussspat (NaF), Amoniumsulfat ((NH3)2SO4), Ortophosphate und/oder Dolomit (CaCO3*MgCO3) als feinstaufgemahlene Gemengekomponenten (21) mit einer Korngröße von 0,001 mm bis 0,5 mm verwendet werden.

4. Hochleistungsschmelzverfahren nach einem der vorhergehenden Ansprüche,
**dadurch gekennzeichnet,**
**dass** das Dünnfilmschmelzverfahren mittels einer innerhalb der Glasschmelze erzeugten konvektiven und/oder mechanischen Strömung und Wärmeleitung unter Zugabe von feinstaufgemahlenem Quarz mit einer Korngröße von 0,001 mm bis 0,5 mm arbeitet.

5. Hochleistungsschmelzverfahren nach einem der vorhergehenden Ansprüche,
**dadurch gekennzeichnet,**
**dass** während oder nach der Feinstaufmahlung der Gemengekomponenten (10) diese mittels geeigneter Mahltechnik, z. B. einer Schwingmühle einer Reaktionsmahlung zur Erzielung von Festkörperreaktionen in den Gemengekomponenten (10) unterzogen werden.

6. Hochleistungsschmelzverfahren für die Glasherstellung als High Efficiency Glas Melter (HEGM),
**dadurch gekennzeichnet,**
**dass** einzelne Gemengekomponenten (20) mittels einer Feinstausmahlung aufgemahlen werden, anschließend mit geeigneten Fördereinrichtungen (4) jeweils auf einen Dünnfilmschmelzer (3) gegeben und hier geschmolzen werden, die jeweilige Gemengeschmelze in eine Konditionierungswanne (1) abfließt und hier mittels eines Rührwerkes (7) und eines oder mehrerer Brenner (8) vermengt, geläutert, konditioniert und auf einer bestimmten Temperatur gehalten wird, ehe die geläuterte und konditionierte Glasschmelze weiteren Verfahrensschritten, wie z. B. einem Float-Bad (9) zugeführt wird.

7. Anlage zum Hochleistungsschmelzverfahren für die Glasherstellung als High Efficiency Glas Melter (HEGM), **gekennzeichnet durch** folgende Merkmale:
- dass um eine zentrale, beheizbare Wanne (1) als Konditionierungswanne (1) mit einem Abflussmodul (2) mindestens ein Dünnfilmschmelzer (3) als Melter (3) angeordnet ist,
- der oder die Dünnfilmschmelzer (3) jeweils über eine Fördereinrichtung (4) mit einem Gemengelager (5) oder mit einer Mahleinrichtung (6) verbunden ist/sind und
- die Konditionierungswanne (1) ein Rührwerk (7) und mindestens einen Brenner (8) besitzt.

8. Anlage nach Anspruch 7,
**dadurch gekennzeichnet,**
**dass** die Konditionierungswanne (1) aus einem Vieleckraumkörper mit an den Vieleckseiten angedockten Melter-Modulen (3) besteht, wobei im Deckenbereich der Konditionierungswanne (1) das Rührwerk (7) und mindestens ein Brenner (8) angeordnet sind.

9. Anlage nach Anspruch 7 und 8,
**dadurch gekennzeichnet,**
**dass** die Dünnfilmschmelzer (3) in ihrer Neigung frei einstellbar sind und aus einem Platinrohr, aus einem mit Platin innenbeschichteten Keramikrohr oder aus einer im Winkel einstellbaren, beschichteten oder unbeschichteten schiefen Ebene bestehen.

10. Anlage nach Anspruch 7 bis 9,
**dadurch gekennzeichnet,**
**dass** mindestens ein Dünnfilmschmelzer (3) aus einem doppelwandigen, in leichter Neigung liegenden Keramikrohr (10), also aus einem Innenrohr (11) und einem Außenrohr (12), mit einer an der Außenseite angebrachten Isolierung (13) aus geeigneten Isolationsmaterialien, wie z. B. Schamotte, besteht und zwischen dem Innenrohr (11) und dem Außenrohr (12) ein Spalt für einen Suszeptor (14) vorgesehen ist und in einem Teilbereich des Keramikrohres (10) mit der Isolierung (13) am Außenumfang, vorzugsweise in der Mitte der Gesamtlänge des Keramikrohres (10), eine oder mehrere Mikrowelle(n) (15) mit ihrer Arbeitsrichtung in Richtung Mittelachse des Keramikrohres (10) vorgesehen ist/sind.

11. Anlage nach einem der Ansprüche 7 bis 10,
**dadurch gekennzeichnet,**
**dass** der oder die Dünnschichtschmelzer (3) austauschbar aus einer Warteposition an die Wanne (1) heranfahrbar gestaltet ist/sind und während der Warteposition die Öffnung für den Melter (3) an der Wanne (1) mit einer Platte verschließbar ist.

12. Anlage nach einem der Ansprüche 7 bis 11,
**dadurch gekennzeichnet,**
**dass** das Abflussmodul (2) in einen Speiser (9), in einen Kanal eines Float-Bades (9) oder in eine Verarbeitungs- oder Formgebungsanlage (9) mündet.

13. Anlage nach einem der Ansprüche 7 bis 12,
**dadurch gekennzeichnet,**
**dass** an der Außenseite um die Öffnungen der Konditionierungswanne (1) für die Melter (3) an der Oberseite und den beiden Seiten Wärmeauffangbleche mit Absaugvorrichtungen (16) vorgesehen sind und dass in die Anlage eine Wärmerückgewinnungsanlage und eine Verbrennungsluftvorwärmung integriert ist.
